# EUROPEAN PATENT SPECIFICATION

(11) **EP 1 444 447 B1**
(45) Date of publication and mention of the grant of the patent: **21.03.2007**
(21) Application number: 02789058.1
(22) Date of filing: 14.11.2002
(51) Int. Cl.: F16B 35/06, F16B 39/282

(54) **SCREW**
SCHRAUBE
VIS

(30) Priority: 16.11.2001 SE 0103811
(43) Date of publication of application: 11.08.2004
(73) Proprietor: VOLVO LASTVAGNAR AB, 405 08 Göteborg (SE)
(72) Inventor: MAGNUSSON, Sture, S-422 57 Hisings Backa (SE)
(74) Representative: Mossmark, Anders Lennart
(86) International application number: PCT/SE2002/002080
(87) International publication number: WO 2003/042555

(56) References cited:
- DE-C- 685 470
- FR-A- 1 183 518
- FR-A- 1 313 956
- GB-A- 191 204 340
- US-A- 3 561 260

## Description

### TECHNICAL FIELD

The present invention relates to a screw according to the preamble of appended claim 1. Such a screw is known, e.g. from GB-A-4340 (A.D. 1912 April 18 Nº 4340).

In order to achieve an elastic pretension in a screw-joint there is a need for a certain so-called pre-tension distance between the contact surface of the screw head against an object and the contact point of the threads of the screw. When the object is of a large thickness it is often sufficient to the let the shaft of the screw be provided with an unthreaded portion immediately adjoining the screw head. In screw-joints with a bolt, the clamping distance in thinner objects can be increased by choosing a relatively thick bolt with a partially unthreaded portion. In screw-unions with materials with relatively thin walls and without a nut, self-threading screws are used in certain cases with thread pressing or thread cutting screw threads which in conventional screws results in a short clamping distance and small possibilities of an elastic pre-tension. This makes the screw union relatively un-elastic, with a risk of material fractures or loosening.

### SUMMARY OF THE INVENTION

The purpose of the present invention is to obtain a screw in which the drawbacks stated above are eliminated.

The said object is obtained by means of a screw according to the invention, the characteristics of which will become apparent from the appended claim 1.

Further developments in line with claim 1 are referred to in the dependent claims.

### FIGURES

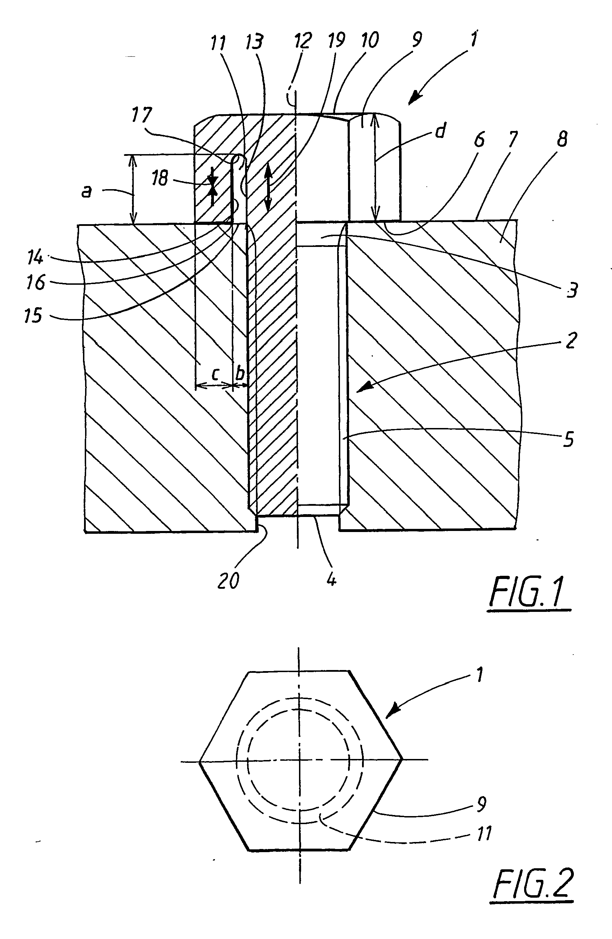

The invention will in the following be described more closely using an example of an embodiment with reference to the appended drawings in which
- Fig. 1: in a partial cut view shows the screw according to the invention screwed into an object while Fig. 2 shows an end view of the screw.

### PREFERRED EMBODIMENT

The screw according to the invention consists in a known manner of two integrated main parts, i.e. a screw head 1 and a screw shaft 2 which protrudes from the screw head. The screw shaft exhibits an inner end 3 and an outer end 4, between which there extends a threaded portion 5. In the example shown, the threaded portion 5 thus extends more or less from the level of the contact surface 6 of the screw head against the surface 7 of the object 8 in which the screw is intended to be screwed into. The object is hinted at in Fig. 1, and can either have thin walls or have a thickness which exceeds the length of the screw shaft 2. The screw is primarily of the self-threading kind, i.e. thread pressing or thread cutting in the object 8, i.e. an unthreaded hole 20 is drilled in the object with a diameter which corresponds to the core diameter of the screw shaft 2. Since the screw is made of a considerably much harder material than the object, the screw thread of the screw itself can be used to form a corresponding thread in the object 8. Alternatively the hole 20 (and the screw also) can be machine threaded. The screw is usually made in metal, suitably steel. For the assembly/disassembly of the screw, the screw head exhibits a contact organ to be brought along by a screwing tool, either hand-tools or a power screwdriver. In the example shown, the contact organs are formed by a cornered contact surface 9 in the perimeter of the screw, for example a hexagonal head. Alternatively, the head can be provided with a recess in the outer side of the head 10, for example a track, a straight track, star track, Torx, Philips or a hexagonal socket head. The screw is according to the invention provided with an internal track 11, which in more detail is arranged in the screw head 1 on the inside of the head, i.e. at the contact area 6, in more detail between the area and the inner end 3 of the shaft 2. The track 11 is ring-shaped and relatively deep, i.e. exhibits a relatively great extension in the axial direction, i.e. the direction of the longitudinal axis 12.

Furthermore, the track 11 in the example shown has a width b, i.e. a radial extension or measurement in the radial plane of the screw which is substantially smaller than the depth of the track a, in more detail the width is smaller than 1/3 of the depth of the track. Furthermore, the width b of the track is smaller than the smallest radial outer extension c of the screw head 1 which varies according to how the cut is made, depending on the edged perimeter. In more detail, the width of the track is smaller than half of the width c of the contact surface 6, and in the order of size of 1/3 of the smallest width c of the contact surface 6. The depth of the track is in the example shown larger than half the height d of the screw head 1. In embodiments with an internal recess in the screw head for the contact organs of the screw, their dimensions should be chosen so that a sufficient material thickness is maintained between the contact organs and the track 11. The depth of the track is chosen to achieve an optimal balance between the demands of a large elastic pre-tension force and a high structural strength. Depending on dimensions and choices of material, the depth of the track 11 should however be within the interval 25-75% of the height of the screw head 1. For example, the depth of the track 11 in a hexagonal edged screw M8 should be in the interval 2-3 mm, while the corresponding depth in an M20 should be in the interval 3-9 mm, for example 7 mm at a total height of the head of 12,5 mm.

The screw shaft is essentially cylindrical with a surface profile in the form of the threaded portion. The shaft can alternatively have another cross-sectional form than circular. The cross-section can also vary over the length of the shaft, for example be threaded towards the free end, such as entirely or partial conical, for example pointed. In a corresponding manner, the track 11 forms two cylindrical surface areas which face each other, an inner radially outwards facing track surface 13, and an outer radially inwards facing track surface 14. These surfaces extend co-axially with the screw along its longitudinal axis 12. The inner track surface 13 in the example shown exhibits the same parameter as the thread ridges of the screw shaft 2, but can alternatively have another diameter, for example equal to the core diameter of the shaft. The track 11 additionally forms a ring-shaped opening 15 between the inner end of the screw shaft and the contact surface 6 which is delimited by a sharp ring-shaped edge 16 which constitutes a transition from the track surface 14 and the contact surface 6. This is entirely plane and is situated in a radial plane of the longitudinal axis 12.

The track 11 furthermore advantageously exhibits a rounded bottom 17, i.e. an inner portion which forms a rounded concave surface between the cylinder shaped track surfaces 13, 14. The rounded surface 17 in a cross-section exhibits the shape of a semicircle, and eliminates local tension concentrations in the material which easily arise in sharp inner corners.

The purpose of the relatively deep ring-shaped track 11 in the screw head 1 is thus to obtain an extra clamping distance as seen from the inner end of the threaded portion to the contact surface 6 of the screw head, by means of which a good elastic pretension can be obtained in the screw union in question. From the point of view of material stress, it can be said that the track 11 divides the screw head into a compression portion 18, see the arrows, positioned radially outside of the track 11, and an expansion portion 19, see the arrows, positioned radially inside of the track 11, which in practise constitutes an extension of the screw shaft 2, so that the elasticity in the screw material is utilized maximally in order to create an elastic pretension with a reduced risk of material fractures or loosening.

The invention is not limited to the examples of embodiments which have been described above and shown in the drawings, but can be varied within the scope of the appended claims. For example, track 11 can be of another form and other dimensions in order to still achieve the same effect. Additionally, the threaded portion can end at a level which is below the screw head by means of which additionally increased clamping length is obtained.

## Claims

1. A screw consisting of both a screw head (1) with a contact surface (6) and contact organs (9) for turning of the screw about its longitudinal axis (12) by means of tools and a screw shaft (2) which protrudes from the screw head with a threaded portion (5), a ring-shaped track (11) protruding at the contact surface, **characterized in that** the track exhibits in the axial direction of the screw a depth (a) which exceeds the radial width (b) of the track, that the contact surface (6) of the screw head has a width in the radial direction which exceeds the width of the track (11) and that the depth (a) of the track (11) exceeds half the height (d) of the screw head (1), by means of which the screw head (1) is divided into a peripheral outer compression portion (18) positioned radially outside of the track and an expansion portion (19) positioned radially inside of the track, both of which parties are arranged to elastically pre-tense the screw when it is screwed into position.

2. A screw according to claim 1, **characterized in that** the depth (a) of the track (11) exceeds 25% of the height (d) of the screw head (1)

3. A screw according to any of claims 1-2, **characterized in that** the depth (a) of the track (11) is smaller than 75% of the height (d) of the screw head (1).

4. A screw according to claim 1, **characterized in that** the threaded portion (5) terminates in its inner end (3) on a level with the contact surface (6) of the screw head (1).

5. A screw according to claim 1, **characterized in that** the screw is of the self-threading kind.

6. A screw according to any of the previous claims, **characterized in that** the bottom (17) of the track (11) is concavely bent.

7. A screw according to claim 6, **characterized in that** the bottom (17) of the track exhibits a semi-circular cross-section shape.

8. A screw according to claim 4, **characterized in that** the track (11) exhibits two cylindrical surfaces (13, 14) which are coaxial with the screw shaft (2).

9. A screw according to claim 8, **characterized in that** the radially inner of the cylindrical surfaces (13) of the track is of the same diameter as the screw shaft (2).

## Patentansprüche

1. Schraube, mit:
sowohl einem Schraubenkopf (1), welcher eine Anlagefläche (6) und Eingriffsflächen (9) zum Drehen der Schraube um ihre Längsachse (12) mittels Werkzeugen aufweist als auch einem Schraubenschaft (2), welcher von dem Schraubenkopf vorsteht und einen Gewindeabschnitt (5) aufweist, wobei sich (5)eine ringförmige Ausnehmung (11) an der Anlagefläche erstreckt,
**dadurch gekennzeichnet, dass** die Ausnehmung in axialer Richtung der Schraube eine Tiefe (a) aufweist, die größer ist als die radiale Breite (b) der Ausnehmung;
dass die Anlagefläche (6) des Schraubenkopfes eine Breite in radialer Richtung aufweist, die größer ist als die Breite der Ausnehmung (11); und
dass die Tiefe (a) der Ausnehmung (11) größer ist als die Hälfte der Höhe (d) des Schraubenkopfes (1), durch welche der Schraubenkopf (1) aufgeteilt ist in einen äußeren Umfangsstauchungsabschnitt (18), welcher radial außerhalb der Ausnehmung angeordnet ist, und einen Ausdehnungsabschnitt (19), welcher radial innerhalb der Ausnehmung angeordnet ist, wobei beide Abschnitte zum elastischen Vorspannen der Schraube beim Schrauben derselben in Position ausgebildet sind.

2. Schraube nach Anspruch 1, **dadurch gekennzeichnet, dass** die Tiefe (a) der Ausnehmung (11) größer ist als 25 % der Höhe (d) des Schraubenkopfes (1).

3. Schraube nach einem der Ansprüche 1-2, **dadurch gekennzeichnet, dass** die Tiefe (a) der Ausnehmung (11) kleiner ist als 75 % der Höhe (d) des Schraubenkopfes (1).

4. Schraube nach Anspruch 1, **dadurch gekennzeichnet, dass** der Gewindeabschnitt (5) an seinem inneren Ende (3) auf einer Ebene mit der Anlagefläche (6) des Schraubenkopfes (1) abschließt.

5. Schraube nach Anspruch 1, **dadurch gekennzeichnet, dass** die Schraube eine gewindeformende Schraube ist.

6. Schraube nach wenigstens einem der vorhergehenden Ansprüche, **dadurch gekennzeichnet, dass** das Ende (17) der Ausnehmung (11) konkav gebogen ist.

7. Schraube nach Anspruch 6, **dadurch gekennzeichnet, dass** das Ende (17) der Ausnehmung eine halbkreisförmige Querschnittsform aufweist.

8. Schraube nach Anspruch 4, **dadurch gekennzeichnet, dass** die Ausnehmung (11) zwei zylindrische Oberflächen (13, 14) aufweist, die koaxial zu dem Schraubenschaft (2) sind.

9. Schraube nach Anspruch 8, **dadurch gekennzeichnet, dass** die radial gesehen innere der zylindrischen Oberflächen (13) der Ausnehmung den gleichen Durchmesser wie der Schraubenschaft (2) besitzt.

## Revendications

1. Vis constituée d'une tête de vis (1) munie d'une surface de contact (6) et d'organes de contact (9) pour tourner la vis autour de son axe longitudinal (12) par l'intermédiaire d'outils, et d'un arbre de vis (2) qui fait saillie de la tête de vis munie d'une partie filetée (5), une piste en forme d'anneau (11) faisant saillie à la surface de contact, **caractérisée en ce que** la piste présente, dans la direction axiale de la vis, une profondeur (a) qui dépasse la largeur radiale (b) de la piste, **en ce que** la surface de contact (6) de la tête de vis a une largeur dans la direction radiale qui dépasse la largeur de la piste (11), et **en ce que** la profondeur (a) de la piste (11) dépasse la moitié de la hauteur (d) de la tête de vis (1), de sorte que la tête de vis (1) est divisée en une partie de compression extérieure périphérique (18) positionnée radialement à l'extérieur de la piste, et une partie de dilatation (19) positionnée radialement à l'intérieur de la piste, les parties étant agencées pour prétendre de manière élastique la vis quand elle est vissée en position.

2. Vis selon la revendication 1, **caractérisée en ce que** la profondeur (a) de la piste (11) dépasse 25 % de la hauteur (d) de la tête de vis (1).

3. Vis selon la revendication 1 ou 2, **caractérisée en ce que** la profondeur (a) de la piste (11) est plus petite que 75 % de la hauteur (d) de la tête de vis (1).

4. Vis selon la revendication 1, **caractérisée en ce que** la partie de vis (5) se termine en son extrémité intérieure (3) au même niveau que la surface de contact (6) de la tête de vis (1).

5. Vis selon la revendication 1, **caractérisée en ce que** la vis est du type autotaraudant.

6. Vis selon l'une quelconque des revendications précédentes, **caractérisé en ce que** le fond (17) de la piste (11) est incurvé de manière concave.

7. Vis selon la revendication 6, **caractérisée en ce que** le fond (17) de la piste présente une forme de coupe transversale semi-circulaire.

8. Vis selon la revendication 4, **caractérisée en ce que** la piste (11) présente deux surfaces cylindriques (13, 14) qui sont coaxiales avec l'arbre de vis (2).

9. Vis selon la revendication 8, **caractérisée en ce que** la partie radialement intérieure des surfaces cylindriques (13) de la piste est du même diamètre que l'arbre de vis (2).
